# EUROPEAN PATENT SPECIFICATION

(11) **EP 4 067 762 B1**
(45) Date of publication and mention of the grant of the patent: **13.12.2023**
(21) Application number: 22158701.7
(22) Date of filing: 25.02.2022
(51) Int. Cl.: F24F 8/15, B01D 53/62, B01D 53/02

(54) **AN AIR PURIFIER DETECTING LEAKS**
LUFTREINIGER ZUR ERKENNUNG VON LECKAGEN
PURIFICATEUR D'AIR DÉTECTANT LES FUITES

(30) Priority: 30.03.2021 TR 202105663
(43) Date of publication of application: 05.10.2022
(73) Proprietor: Arçelik Anonim Sirketi, 34445 Istanbul (TR)
(72) Inventor: TARKUC, Simge, 34445 ISTANBUL (TR); ER, Dilan, 34445 ISTANBUL (TR); KESKIN, Ege, 34445 ISTANBUL (TR); KANDEMIR, Nihat, 34445 ISTANBUL (TR); CELIK, Filiz, 34445 ISTANBUL (TR)

(56) References cited:
- EP-A1- 2 075 512
- WO-A2-2006/036396
- JP-A- 2003 144 828
- US-A1- 2013 336 722
- US-A1- 2015 290 576

## Description

The present invention relates to an air purifier wherein the ambient air is purified by processing the carbon dioxide in the air with acidic and basic solutions and adsorbing the carbon dioxide and wherein any leak in the solution tanks used for adsorbing carbon dioxide is detected.

The need for purifying the air inside indoor environments such as buildings, homes and offices is gaining importance for human health day by day. In particular, in devices that purify the air by filtering, the carbon dioxide ratio in the air remains constant and only matters such as dust, etc. are filtered and the inhaled air is purified from contents such as bacteria, dust, fungi, and viruses. In devices wherein the carbon dioxide in the air is chemically adsorbed (with basic and acidic solutions) so as to completely purify the air, if there is any leak in the receptacles receiving the solutions, it is very important to instantly detect the leak. If the leak is detected late, the components in the device may wear out and the device may become inoperable. Moreover, in case of leaks, it is important for the continuous operation of the device to collect the solution before contacting any component in the body.

The state of the art air purifiers comprising acidic and basic solutions has a receptacle which is disposed at the lower side of the body and which collects the solutions in case of a leak. However, in such devices, the acid and base leaks may contact various parts in the body before reaching the receptacle. This contact may cause wear if prolonged. Furthermore, small leaks may evaporate before reaching the receptacle and the user may not notice the leaks. US2013/336722 discloses an air purifier comprising the features of the preamble of claim 1.

The aim of the present invention is the realization of an air purifier which detect and direct any leak in the tanks wherein the acidic, basic and salt solutions are loaded, and which detects at which tank the leak occurs.

The air purifier of the present invention comprises a body having an air inlet through which the ambient air in an environment such as closed building, room, office, etc. is sucked by means of a fan and a pump, and a clean air outlet through which the cleaned air is released back into the environment. The air is sucked into a unit in the body. The basic solution in a base tank disposed in the body is supplied to said unit, and the carbon dioxide in the air is converted to carbonate solution as a result of the chemical reaction thereof with the basic solution, and then adsorbed by said unit. The basic solution and the gases in the air such as carbon dioxide, etc. react, and the reaction results in the carbonate compound (in the form of liquid solution) and other by-products. Thus, the carbon dioxide is adsorbed in the unit in the form of carbonate (bicarbonate, etc.). Other gases (oxygen and other gases found in the natural air) released as a result of the reaction are discharged back to the room through a clean air outlet.

The reaction realized in the unit/receptacle where the carbon dioxide is adsorbed can be symbolized as in the following reaction:

MOH + CO₂ + other inert gases in the air → M(CO₃)/MH(CO₃) + clean air (carbon dioxide thereof adsorbed).

In order to realize the invention, basic solutions such as monoethanolamine, ammonia, alkaline solutions (KOH, NaOH) can be used in the base tank. These solutions react with the carbon dioxide and produce carbonate-based compounds. Therefore, these basic solutions can enable the adsorption of the carbon dioxide which is required for the operation of the air purifier of the present invention.

In the air purifier of the present invention, the carbonate solution generated as a result of the air and the basic solution are processed with an acidic solution, thus releasing carbon dioxide again, and a salt solution is generated during the producing of carbon dioxide. Thus, The carbon dioxide separated from the ambient air is discharged out of the environment (room, office, etc.) by means of a separate discharge channel. In an embodiment of the present invention, said discharge channel can be a pipe which opens to the outside by drilling a room wall and which is connected to the body at one end.

The carbonate solution which is produced in the unit is then processed with an acidic solution.

In an embodiment of the present invention, the acidic solution can be a strong acid (H₂SO4, HCl), weak acid (K₃PO₄) or an organic acid. The air purifier of the present invention comprises an acid tank wherein the acidic solution is loaded.

The acid tank and the base tank are manufactured from a material resistant to acid and base solutions, for example polypropylene.

The carbonate solution generated in the air purifier of the present invention and the acidic solution are mixed in a mixture tank, and the salt solution is produced in said tank.

By means of the present invention, an air purifier is realized, wherein any leak in the tanks comprising the solutions (acid, base and salt) is collected before leaking into the body and it is detected at which tank the leak occurs.

The model embodiments that relate to the air purifier realized in order to attain the aim of the present invention are illustrated in the attached figures, where:

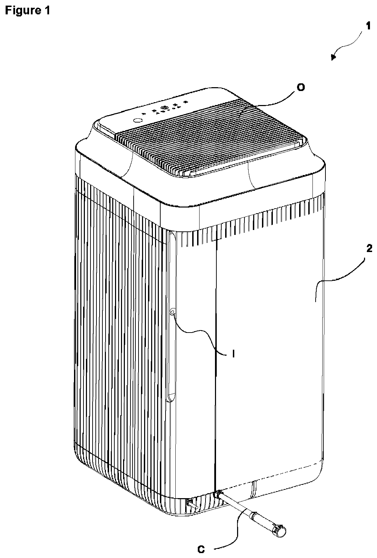

**Figure 1** - is the perspective view of the air purifier in an embodiment of the present invention.

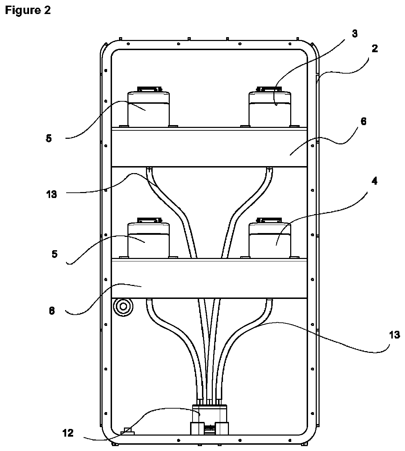

**Figure 2** - is the view of the arrangement of the acidic, base and mixture tanks in the air purifier in an embodiment of the present invention.

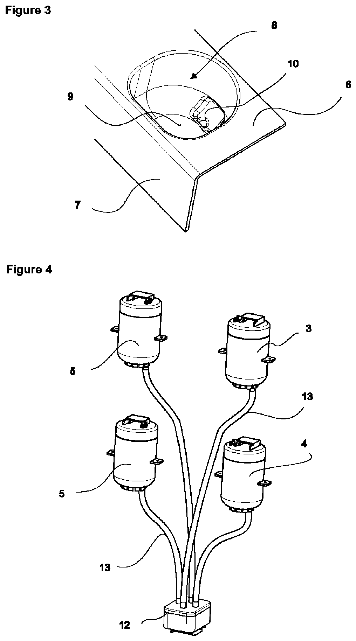

**Figure 3** - is the view of the housing in the shelf in the air purifier in an embodiment of the present invention.
**Figure 4** - is the view of the tanks and the pipes in the air purifier in an embodiment of the present invention.

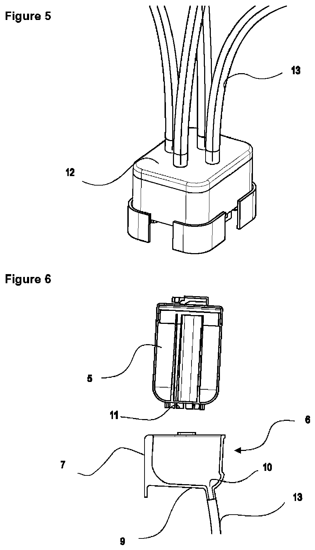

**Figure 5** - is the view of the measurement receptacle in the air purifier in an embodiment of the present invention.
**Figure 6** - is the cross-sectional view of the tank and the housing in the air purifier of the present invention.

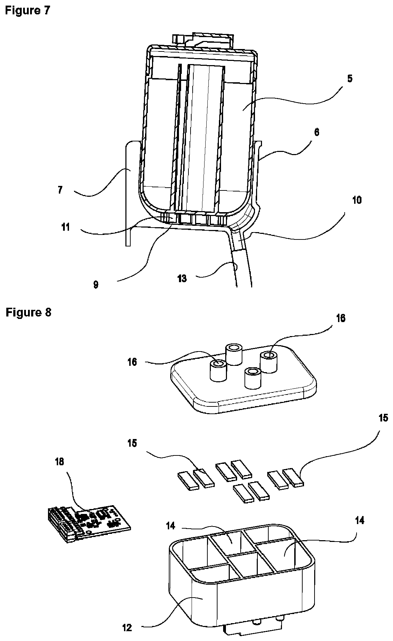

**Figure 7** - is the cross-sectional view of the tank placed into the housing in the air purifier of the present invention.
**Figure 8** - is the exploded view of the measurement receptacle in the air purifier of the present invention.

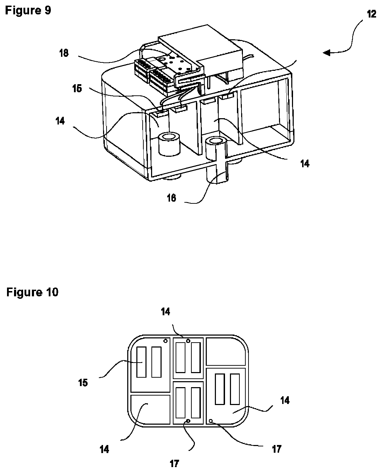

**Figure 9** - is the view of the inside of the measurement receptacle in the air purifier of the present invention.
**Figure 10** - is the top view of the base of the measurement receptacle in the air purifier of the present invention.

The elements illustrated in the figures are numbered as follows:
1. Air purifier
2. Body
3. Acid tank
4. Base tank
5. Mixture tank
6. Shelf
7. Front wall
8. Housing
9. Inclined base
10. Opening
11. Foot
12. Measurement receptacle
13. Pipe
14. Partition
15. Conductive plate
16. Channel
17. Hole
18. Circuit board
I: Air inlet
O: Clean air outlet
C: CO₂ outlet

The air purifier (1) comprises a body (2) having an air inlet (I) through which the ambient air is sucked, a clean air outlet (O) through which the cleaned air is released to the environment and a CO₂ outlet (C) through which the carbon dioxide separated from the air is discharged to the outside; a base tank (4) containing a basic solution for converting the carbon dioxide in the air into carbonate solution and thus chemically adsorbing the same; a mixture tank (5) which receives the carbonate solution to be processed with an acidic solution, and an acid tank (3) which supplies the acidic solution to the mixture tank (5).

The air purifier (1) of the present invention comprises a shelf (6) comprising a housing (8) which has an inclined base (9), and wherein the acid tank (3), the base tank (4) or the mixture tank (5) is placed; an opening (10) which is provided on the base (9), a pipe (13) which is connected to the opening (10); and a measurement receptacle (12) which has a channel (16) connected to the other end of the pipe (13).

The air purifier (1) of the present invention comprises the acid tank (3) and the base tank (4) which contain the acidic and basic solutions, respectively, such that the carbon dioxide in the ambient air is first adsorbed and the purified air is discharged back to the environment, and then the carbon dioxide is released again to be discharged outside through a discharge line. Moreover, there is the mixture tank (5) wherein the air from which the carbon dioxide is adsorbed is processed with the acidic solution. The acid tank (3), the base tank (4) or the mixture tank (5) is placed into the housing (8) provided on the shelf (6). The housing (8) has the inclined base (9) and the opening (10) provided on the inclined base (9). If there is any leak when the acid tank (3), the base tank (4) or the mixture tank (5) is placed into the housing (8), the leak flows towards the opening (10) thanks to the inclined base (9). By means of the pipe (13) connected to the opening (10), the leak is sent to the measurement receptacle (12) through the channel (16) which is connected to the other end of the pipe (13). Thus, the chemical solutions can be collected in the measurement receptacle (12) without contacting any part inside the body (2).

In an embodiment of the present invention, the air purifier (1) comprises the housing (8) having the inclined base (9) with an inclination between 5 to 20 degrees from the front wall (7) of the shelf (6) towards the opening (10). Thus, the leak is easily directed to the opening (10) without accumulating on the inclined base (9).

In an embodiment of the present invention, the air purifier (1) comprises the housing (8) with the height at least half the height of the acid tank (3), the base tank (4) or the mixture tank (5) placed into the housing (8). Thus, the acid tank (3), the base tank (4) and the mixture tank (5) can be firmly placed into the housing (8).

In an embodiment of the present invention, the air purifier (1) comprises a foot (11) which enables the acid tank (3), the base tank (4) and the mixture tank (5) to be placed into the housing (8) such that a gap remains between the tanks (3, 4, 5) and the inclined base (9). The foot (11) ensures a gap between the housing (8), and the acid tank (3), the base tank (4) or the mixture tank (5) placed into the housing (8), thus in case of leak, it is prevented from being directed towards the opening (10).

In an embodiment of the present invention, the air purifier (1) comprises the measurement receptacle (12) having a plurality of partitions (14) which are separately connected to the ends of the pipes (13) connected to the opening (10) on each housing (8) wherein the acid tank (3), the base tank (4) or the mixture tank (5) is placed. Thus, each solution can be collected in a separate partition (14) without getting mixed with the others.

In an embodiment of the present invention, the air purifier (1) comprises a plurality of conductive plates (15) placed into each partition (14) and a circuit board (18) which is connected to the conductive plates (15). By means of the conductive plate (15), the presence of the fluid in the partitions (14) can be detected thanks to the conductive property thereof. In the preferred embodiment of the present invention, the conductive plate (15) is disposed in the partition (14) as a pair.

In an embodiment of the present invention, the air purifier (1) comprises the conductive plate (15) which is manufactured from a material such as stainless steel, platinized titanium, gold and/or graphite.

In an embodiment of the present invention, the air purifier (1) comprises the conductive plate (15) the surface of which is coated with epoxy. Thus, the conductive plate (15) is prevented from being corroded due to the chemical solution.

In an embodiment of the present invention, the air purifier (1) comprises the measurement receptacle (12) having a hole (17) provided on the base of each partition (14). Thus, the leaking fluids collected in the measurement receptacle (12) are discharged through the hole (17) at certain intervals.

In an embodiment of the present invention, the air purifier (1) comprises the measurement receptacle (12) wherein the diameter of the hole (17) is smaller than the diameter of the channel (16) at the inlets of the measurement receptacle (12). Thus, the leaking fluids collected in the measurement receptacle (12) are prevented from being discharged before contacting the conductive plate (15).

By means of the present invention, an air purifier (1) is realized, wherein any leak in the acid tank (3), the base tank (4) and the mixture tank (5) can be collected before contacting the body (2).

## Claims

1. An air purifier (1) **comprising** a body (2) having an air inlet (I) through which the ambient air is sucked, a clean air outlet (O) through which the cleaned air is released to the environment and a CO₂ outlet (C) through which the carbon dioxide separated from the air is discharged to the outside; a base tank (4) containing a basic solution for converting the carbon dioxide in the air into carbonate solution and thus chemically adsorbing the same; a mixture tank (5) which receives the carbonate solution to be processed with an acidic solution, and an acid tank (3) which supplies the acidic solution to the mixture tank (5), **characterized by** a shelf (6) comprising a housing (8) which has an inclined base (9) and wherein the acid tank (3), the base tank (4) or the mixture tank (5) is placed; an opening (10) which is provided on the base (9), a pipe (13) which is connected to the opening (10); and a measurement receptacle (12) which has a channel (16) connected to the other end of the pipe (13).

2. An air purifier (1) as in Claim 1, **characterized by** the housing (8) having the inclined base (9) with an inclination between 5 to 20 degrees from the front wall (7) of the shelf (6) towards the opening (10).

3. An air purifier (1) as in Claim 1 or 2, **characterized by** the housing (8) with the height at least half the height of the acid tank (3), the base tank (4) or the mixture tank (5) placed into the housing (8).

4. An air purifier (1) as in any one of the Claims 1 to 3, **characterized by** a foot (11) which enables the acid tank (3), the base tank (4) and the mixture tank (5) to be placed into the housing (8) such that a gap remains between the tanks (3, 4, 5) and the inclined base (9).

5. An air purifier (1) as in any one of the above claims, **characterized by** the measurement receptacle (12) having a plurality of partitions (14) which are separately connected to the ends of the pipes (13) connected to the opening (10) on each housing (8) wherein the acid tank (3), the base tank (4) or the mixture tank (5) is placed.

6. An air purifier (1) as in Claim 5, **characterized by** a plurality of conductive plates (15) placed into each partition (14) and a circuit board (18) which is connected to the conductive plates (15).

7. An air purifier (1) as in Claim 6, **characterized by** the conductive plate (15) which is manufactured from a material such as stainless steel, platinized titanium, gold and/or graphite.

8. An air purifier (1) as in Claim 6 or 7, **characterized by** the conductive plate (15) the surface of which is coated with epoxy.

9. An air purifier (1) as in any one of the Claims 5 to 8, **characterized by** the measurement receptacle (12) having a hole (17) provided on the base of each partition (14).

10. An air purifier (1) as in Claim 9, **characterized by** the measurement receptacle (12) wherein the diameter of the hole (17) is smaller than the diameter of the channel (16) at the inlets of the measurement receptacle (12).

## Patentansprüche

1. Ein Luftreiniger (1) umfasst einen Körper (2) mit einem Lufteinlass (I), durch den die Umgebungsluft angesaugt wird, einen Reinluftauslass (O), durch den die gereinigte Luft an die Umgebung abgegeben wird und einen CO2-Auslass (C), durch den das aus der Luft abgeschiedene Kohlendioxid nach außen abgegeben wird; einen Basistank (4), der eine basische Lösung enthält, um das Kohlendioxid in der Luft in Carbonatlösung umzuwandeln und diese somit chemisch zu adsorbieren; einen Mischtank (5), der die mit einer sauren Lösung zu verarbeitende Carbonatlösung aufnimmt, und einen Säuretank (3), der die saure Lösung dem Mischtank (5) zuführt, **gekennzeichnet ist es durch** einen Regal (6), dass ein Gehäuse (8) umfasst, das einen geneigten Boden (9) aufweist und in dem der Säuretank (3), der Basistank (4) oder der Mischtank (5) platziert ist; eine Öffnung (10), die an dem Boden (9) vorgesehen ist, ein Rohr (13), das mit der Öffnung (10) verbunden ist; und einen Messbehälter (12), der einen Kanal (16) aufweist, der mit dem anderen Ende des Rohrs (13) verbunden ist.

2. Ein Luftreiniger (1), wie in Anspruch 1 aufgeführt, **ist dadurch gekennzeichnet, dass** das Gehäuse (8) den geneigten Boden (9) mit einer Neigung zwischen 5 bis 20 Grad von der Vorderwand (7) des Regals (6) in Richtung der Öffnung (10) aufweist.

3. Ein Luftreiniger (1), wie in Anspruch 1 oder 2 aufgeführt, **ist dadurch gekennzeichnet, dass** das Gehäuse (8) mit der Höhe mindestens der halben Höhe des Säuretanks (3), des Basistank (4) oder des Mischtanks (5) im Gehäuse (8) platziert ist.

4. Ein Luftreiniger (1), wie in einem der Ansprüche 1 bis 3 aufgeführt, **ist dadurch gekennzeichnet, dass** ein Fuß (11) es ermöglicht, den Säuretank (3), den Basistank (4) und den Mischtank (5) so in das Gehäuse (8) zu platzieren, dass zwischen den Tanks (3, 4, 5) und ein geneigten Boden (9) ein Spalt verbleibt.

5. Ein Luftreiniger (1), wie in einem der vorherigen Ansprüchen aufgeführt, **ist dadurch gekennzeichnet, dass** der Messbehälter (12) eine Vielzahl von Trennwänden (14) aufweist, die separat mit den Enden der Rohre (13) verbunden sind, die mit der Öffnung (10) an jedem Gehäuse (8) verbunden sind, in dem der Säuretank (3), der Basistank (4) oder der Mischtank (5) angeordnet ist.

6. Ein Luftreiniger (1), wie in Anspruch 5 aufgeführt, **ist dadurch gekennzeichnet, dass** in jeder Trennwand (14) mehrere leitende Platten (15) und eine Leiterplatte (18) angeordnet sind, die mit den leitenden Platten (15) verbunden ist.

7. Ein Luftreiniger (1), wie in Anspruch 6 aufgeführt, **ist dadurch gekennzeichnet, dass** die leitende Platte (15) aus einem Material wie Edelstahl, platiniertem Titan, Gold und/oder Graphit hergestellt ist.

8. Ein Luftreiniger (1), wie in Anspruch 6 oder 7 aufgeführt, **ist dadurch gekennzeichnet, dass** die leitende Platte (15) deren Oberfläche mit Epoxidharz beschichtet ist.

9. Ein Luftreiniger (1), wie in einem der Ansprüche 5 bis 8 aufgeführt, **ist dadurch gekennzeichnet, dass** der Messbehälter (12) ein Loch (17) aufweist, das am Boden jeder Trennwand (14) vorgesehen ist.

10. Ein Luftreiniger (1), wie in Anspruch 9 aufgeführt, **ist dadurch gekennzeichnet, dass** der Durchmesser des Lochs (17) kleiner ist als der Durchmesser des Kanals (16) an den Einlässen des Messbehälters (12).

## Revendications

1. Un purificateur d'air (1) **comprenant** un corps (2) avec une entrée d'air (I) par laquelle l'air ambiant est aspiré, une sortie d'air pur (O) par laquelle l'air purifié est libéré dans l'environnement et une sortie de CO₂ (C) par laquelle le dioxyde de carbone séparé de l'air est déchargé à l'extérieur ; un réservoir de base (4) contenant une solution basique pour convertir le dioxyde de carbone dans l'air en solution de carbonate et ainsi l'adsorber chimiquement ; un réservoir de mélange (5) qui reçoit la solution de carbonate à traiter avec une solution acide, et un réservoir d'acide (3) qui fournit la solution acide au réservoir de mélange (5), **caractérisé par** une étagère (6) comprenant un boîtier (8) qui a une base inclinée (9) et dans laquelle est placé le réservoir d'acide (3), le réservoir de base (4) ou le réservoir de mélange (5) ; une ouverture (10) pratiquée sur la base (9), un tuyau (13) relié à l'ouverture (10) et un récipient de mesure (12) doté d'un canal (16) relié à l'autre extrémité du tuyau (13).

2. Un purificateur d'air (1) tel que dans la déclaration 1, **caractérisé par le fait que** le boîtier (8) a la base inclinée (9) avec une inclinaison entre 5 à 20 degrés de la paroi avant (7) de la tablette (6) vers l'ouverture (10).

3. Un purificateur d'air (1) selon la déclaration 1 ou 2, **caractérisé par** le boîtier (8) dont la hauteur est au moins égale à la moitié de la hauteur du réservoir d'acide (3), du réservoir de base (4) ou du réservoir de mélange (5) placé dans le boîtier (8).

4. Un purificateur d'air (1) selon l'une quelconque des déclarations 1 à 3, **caractérisé par** un pied (11) qui permet de placer le réservoir d'acide (3), le réservoir de base (4) et le réservoir de mélange (5) dans le boîtier (8) de telle sorte qu'un espace subsiste entre les réservoirs (3, 4, 5) et la base inclinée (9).

5. Un purificateur d'air (1) tel que décrit dans l'une quelconque des déclarations précédentes, **caractérisé par le fait que** le réceptacle de mesure (12) comporte plusieurs cloisons (14) qui sont reliées séparément aux extrémités des tuyaux (13) connectés à l'ouverture (10) sur chaque boîtier (8) dans lequel est placé le réservoir d'acide (3), le réservoir de base (4) ou le réservoir de mélange (5).

6. Un purificateur d'air (1) selon la déclaration 5, **caractérisé par** une pluralité de plaques conductrices (15) placées dans chaque cloison (14) et une carte de circuit imprimé (18) qui est connectée aux plaques conductrices (15).

7. Un purificateur d'air (1) selon la déclaration 6, **caractérisé par** la plaque conductrice (15) qui est fabriquée à partir d'un matériau tel que l'acier inoxydable, le titane platiné, l'or et/ou le graphite.

8. Un purificateur d'air (1) selon la déclaration 6 ou 7, **caractérisé par** la plaque conductrice (15) dont la surface est recouverte d'époxy.

9. Un purificateur d'air (1) selon l'une quelconque des déclarations 5 à 8, **caractérisé par le fait que** le réceptacle de mesure (12) comporte un trou (17) prévu à la base de chaque cloison (14).

10. Un purificateur d'air (1) selon la déclaration 9, **caractérisé par** le réceptacle de mesure (12) dans lequel le diamètre du trou (17) est plus petit que le diamètre du canal (16) au niveau des entrées du réceptacle de mesure (12).
